# EUROPÄISCHE PATENTANMELDUNG

(11) **EP 2 856 912 A1**
(43) Veröffentlichungstag der Anmeldung: **08.04.2015**
(21) Anmeldenummer: 13187093.3
(22) Anmeldetag: 02.10.2013
(51) Int. Cl.: A47B 96/00, B32B 21/00, E06B 5/00, E06B 3/70, E06B 3/82

(54) **Trägerplatte für den Möbelbau, Verbundplatte sowie Verfahren zu deren Herstellung**

(71) Anmelder: Schmidt, Wolfgang, 33102 Paderborn (DE)
(72) Erfinder: Schmidt, Wolfgang, 33102 Paderborn (DE)
(74) Vertreter: Ter Meer Steinmeister & Partner

(57) **Zusammenfassung**

Trägerplatte für den Möbelbau, insbesondere geeignet als Träger für eine Dekorplatte, welche Trägerplatte mehrschichtig aufgebaut ist und zumindest teilweise aus einem Holzwerkstoff besteht, dadurch gekennzeichnet, dass die Trägerplatte eine Rahmen umfasst, der aus Rahmenleisten aus einem Holzspanwerkstoff oder einem Holzfaserwerkstoff ohne feste Verbindungsmittel an den Stoßstellen zwischen den Rahmenleisten zusammengesetzt ist, eine Frontplatte und eine Rückplatte, die an der Frontseite und der Rückseite der Trägerplatte auf den Rahmen aufgeklebt sind, derart, dass zwischen der Frontplatte und der Rückplatte ein Hohlraum innerhalb des Rahmens verbleibt, und eine Füllplatte, die in diesem Hohlraum lose einliegt und eine Dichte aufweist, die geringer ist als diejenige des Holzwerkstoffs der Rahmenleisten.

## Beschreibung

Die vorliegende Erfindung betrifft eine Trägerplatte für den Möbelbau gemäß dem Oberbegriff des Anspruchs 1, eine Verbundplatte, die eine solche Trägerplatte umfasst, sowie ein Verfahren zur Herstellung einer solchen Trägerplatte.

Bei der Möbelproduktion finden Trägerplatten aus Holzwerkstoffen schon seit vielen Jahren breite Verwendung. Insbesondere Holzspanwerkstoffe und Holzfaserwerkstoffe sind bewährte Materialien hinsichtlich Stabilität und Haltbarkeit, und sie lassen sich gut zu relativ niedrigen Herstellungskosten verarbeiten. Üblich sind beispielsweise seit langem Spanplatten, die mit einem Kunststoffmaterial beschichtet sind.

Seit einiger Zeit besteht eine Nachfrage nach Möbeln, deren Fronten mit Hochglanzmaterialien kaschiert sind. Hierzu werden unter anderem Dekorplatten verwendet, die aus Glas, Polykarbonat oder einem anderen geeigneten Kunststoff bestehen und auf die Frontseite einer Trägerplatte aufgeklebt werden, während die Trägerplatte selbst in bewährter Weise aus Holzwerkstoffen besteht. Beispielsweise lassen sich Schranktüren oder Schubladenfronten aus solchen Verbundplatten herstellen.

Da die verschiedenen Schichten der Trägerplatte aus Materialien mit unterschiedlichen Eigenschaften bestehen, zeigen sich Probleme bei stark wechselnden klimatischen Bedingungen, also bei extremen Temperaturschwankungen und in Räumen mit hoher Luftfeuchtigkeit. Während manche Holzwerkstoffe stark dazu neigen, Feuchtigkeit aufzunehmen und daher aufzuquellen, sind andere Holzwerkstoffe diesbezüglich unempfindlicher und dimensionsstabiler. Dies kann zu einer Krümmung der gesamten Trägerplatte führen. Dieser Effekt kann sich noch verstärken, wenn eine Dekorplatte aus Glas oder einem sehr dimenssionsstabilen Kunststoff auf die Trägerplatte aufgesetzt wird.

Es versteht sich, dass die vorstehend beschriebenen Effekte unter wechselnden klimatischen Bedingungen sich sehr negativ auf die Verwendbarkeit solcher Platten auswirken. Es ist ferner erwünscht, dass die Trägerplatten und somit auch die Verbundplatten insgesamt ein relativ niedriges Gewicht haben, dennoch aber in der Handhabung, z.B. als Schranktür, eine massive und hochwertige Anmutung aufweisen. Bisher war es allerdings nicht möglich, leichte Verbundplatten herzustellen, ohne Zugeständnisse an die Stabilität und die Qualitätsanmutung zu machen.

Es ist daher eine Aufgabe der vorliegenden Erfindung, eine Trägerplatte der eingangs genannten Art dahingehend zu verbessern, dass sie auch unter stark schwankenden klimatischen Bedingungen, also insbesondere stark schwankenden Temperaturen und Luftfeuchtigkeiten, ihre Form beibehält. Eine weitere Aufgabe besteht in der Schaffung einer Verbundplatte aus einer solchen Trägerplatte und einer Dekorplatte der oben beschriebenen Art, die bei verringertem Gewicht zumindest die gleiche Qualitätsanmutung aufweist wie herkömmliche Platten zum Möbelbau.

Diese Aufgabe wird erfindungsgemäß durch eine Trägerplatte mit den Merkmalen des Anspruchs 1 gelöst, sowie durch eine Verbundplatte mit den Merkmalen des Anspruchs 7.

Die erfindungsgemäße Trägerplatte ist mehrschichtig aufgebaut. Sie umfasst in ihrem Kern einen Rahmen, der aus Rahmenleisten zusammengesetzt ist, welche aus einem Holzspanwerkstoff oder einem Holzfaserwerkstoff bestehen. Derartige Werkstoffe wurden auch herkömmlich zur Herstellung einer massiven Trägerplatte eingesetzt. Ein solcher Rahmen kann typischerweise vier Rahmenleisten umfassen, welche die vier Kanten einer rechteckigen Trägerplatte bilden und an den Ecken stumpf aufeinanderstoßen. An den Stoßstellen sind jedoch keine festen Verbindungsmittel zwischen den Rahmenleisten vorgesehen. Das heißt, dass die einzelnen Elemente des Rahmens untereinander nicht durch Klebstoffe oder mechanische Verbindungsmittel wie etwa Schrauben, Beschläge oder dergleichen verbunden sind. Der Rahmen selbst umfasst somit keine Mittel, die ihn zusammenhalten.

Der Zusammenhalt der gesamten Trägerplatte wird durch eine Frontplatte und eine Rückplatte erreicht, die vom und hinten auf den Rahmen aufgeklebt werden. Hierdurch entsteht eine stabile Trägerplatte, die wie die herkömmlichen massiven Trägerplatten verwendet und bearbeitet werden kann. Zwischen der Frontplatte und der Rückplatte verbleibt ein Hohlraum, der seitlich von den Rahmenleisten eingefasst ist. In diesem Hohlraum liegt lose eine Füllplatte mit relativ geringer Dichte ein, die einen leichten Kern der Trägerplatte bildet. Die Füllplatte ist somit weder mit dem Rahmen noch mit der Frontplatte oder der Rückplatte verklebt oder in sonstiger Weise fest verbunden.

Für den Rahmen kann ein Holzwerkstoff eingesetzt werden, der bezüglich seiner Dimensionsstabilität unter wechselnden klimatischen Bedingungen an sich kritisch ist. Dieses Material wird jedoch nicht vollflächig innerhalb der Trägerplatte eingesetzt, sondern seine Verwendung bleibt auf die vergleichsweise schmalen Rahmenleisten beschränkt, die zudem untereinander nicht verbunden sind, sondern lediglich mit der Front- und der Rückplatte verzugsfrei verklebt sind. Bezüglich des Schichtaufbaus ist die Trägerplatte symmetrisch, da die Rückplatte als Gegenzugschicht für die Frontplatte dient. Die einzelnen Rahmenleisten können innerhalb des Trägerplattenverbunds gegeneinander "arbeiten", d.h. Ausdehnungen und Schrumpfungen des Materials der Rahmenleisten werden in gewissem Umfang toleriert.

Die so gebildete Trägerplatte ist im Ergebnis sehr dimensionsstabil und lässt sich problemlos durch eine Dekorplatte der eingangs beschriebenen Art kaschieren. Ein weiterer Vorteil der erfindungsgemäßen Konstruktion liegt in einer Gewichtsersparnis aufgrund des relativ leichten Kerns, der durch die Füllplatte gebildet wird. So läßt sich eine relativ dicke Verbundplatte bilden, die dennoch ein vergleichsweise niedriges Gewicht und eine massive und wertige Qualitätsanmutung aufweist.

Vorzugsweise bestehen die Frontplatte und die Rückplatte jeweils aus einem Material, das aus einem der folgenden Materialien ausgewählt ist: ein hochdichter Holzfaserwerkstoff (HDF), ein mitteldichter Holzfaserwerkstoff (HDF), ein Hartschaum, Polyurethan (PU), ein Polystyrol-Schaum. Dieses Material kann beispielsweise so gewählt sein, dass es bezüglich eines Aufquellens und einer Temperaturstabilität unkritischer ist als das Material des Rahmens und auch eine höhere Dichte aufweist als das Rahmenmaterial.

Gemäß einer weiteren bevorzugten Ausführungsform der Erfindung ist die Füllplatte eine Wabenplatte.

Weiter vorzugsweise ist die Füllplatte aus Kunststoff, Papier, Hartschaum, Polyurethan (PU) oder einem Polystyrol-Schaum hergestellt.

Weiter vorzugsweise weisen die Frontplatte und die Rückplatte etwa die gleiche Dicke auf, und die Dicke des Rahmens beträgt ein Mehrfaches der Dicke der Frontplatte bzw. der Rückplatte. Denkbar ist beispielsweise, dass die Dicke des Rahmens etwa das Drei- bis Vierfache der Dicke der Frontplatte und der Rückplatte beträgt. Beispielsweise weisen die Frontplatte und die Rückplatte eine Dicke von jeweils 3 mm auf, und der Rahmen weist eine Dicke von 11 mm auf.

Die Erfindung betrifft ferner eine Verbundplatte für den Möbelbau, umfassend eine Trägerplatte der vorstehend beschriebenen Art und eine Dekorplatte, die durch Klebestreifen oder Klebepunkte auf die Frontplatte aufgeklebt ist, welche in den Randbereichen der Frontplatte angeordnet sind, die über der Rahmenleisten liegen.

Vorzugsweise besteht die Dekorplatte aus Glas, Metall, Polycarbonat oder einem anderen Kunststoff.

Die Erfindung betrifft außerdem einen Möbelkorpus, dessen Frontseite eine derartige Verbundplatte umfasst.

Eine erfindungsgemäßes Verfahren zur Herstellung einer Trägerplatte für den Möbelbau umfasst die folgenden Schritte:
- Zusammensetzen von Rahmenleisten aus einem Holzspanwerkstoff oder einem Holzfaserwerkstoff zu einem Rahmen, ohne feste Verbindungsmittel an den Stoßstellen zwischen den Rahmenleisten; und
- Aufkleben einer Frontplatte und einer Rückplatte auf die gegenüberliegenden Seiten des Rahmens,
- wobei vor Abschluss des Schritts des Aufklebens der Frontplatte und der Rückplatte auf den Rahmen eine Füllplatte lose in einen von der Frontplatte und der Rückplatte begrenzten Hohlraum innerhalb des Rahmens eingelegt wird.

Die Rahmenleisten werden somit zuerst lose zusammengesetzt, beispielsweise in einer entsprechenden Form, so dass lediglich ihre Anordnung festgelegt wird, ohne dass die Leisten miteinander fest verbunden werden. Anschließend werden die Frontplatte und die Rückplatte auf den Rahmen aufgeklebt, wobei vor dem entgültigen Verschließen des von der Frontplatte und der Rückplatte begrenzten Hohlraums die Füllplatte eingesetzt wird.

Ein erfindungsgemäßes Verfahren zur Herstellung einer Verbundplatte für den Möbelbau umfasst die vorstehend genannten Schritte zur Herstellung einer Trägerplatte und einen zusätzlichen Schritt des Aufklebens einer Dekorplatte auf die Frontplatte der Trägerplatte durch Klebestreifen oder Klebepunkte.

Im folgenden wird eine bevorzugte Ausführungsform des erfindungsgemäßen Verfahrens anhand der Zeichnung näher erläutert.
- Fig. 1: zeigt eine Ausführungsform der erfindungsgemäßen Verbundplatte in einem senkrechten Querschnitt; und
- Fig. 2: ist ein horizontaler Schnitt durch die Ausführungsform der Verbundplatte aus Fig. 1 in der Schnittebene, die in Fig. 1 mit A-A gekennzeichnet ist.

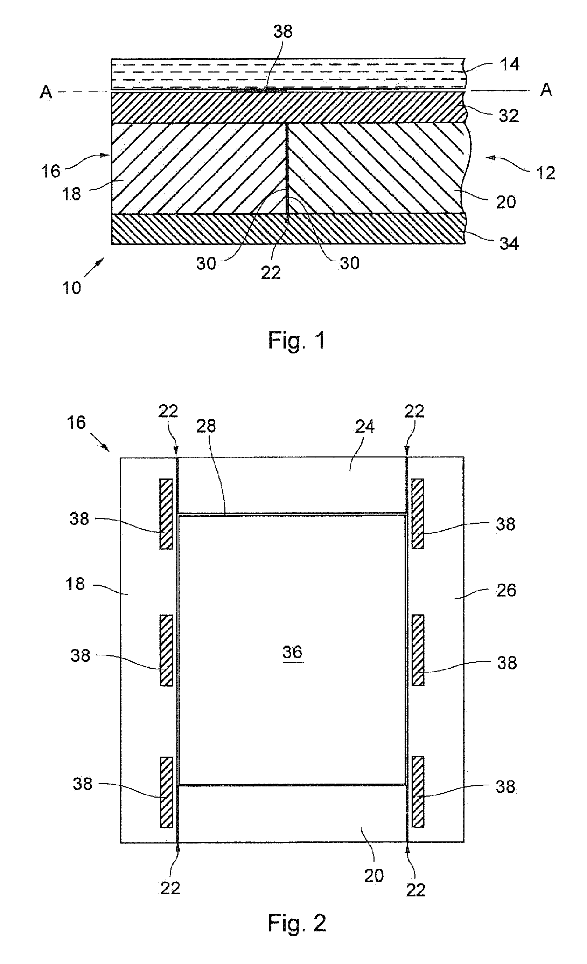

Die in Fig. 1 dargestellte Verbundplatte 10 umfasst eine mehrschichtig aufgebaute Trägerplatte 12, die im wesentlichen aus Holzwerkstoffen gefertigt ist, und eine auf die Trägerplatte 12 aufgesetzte Dekorplatte 14 aus Glas, Metall, Polykarbonat oder einem anderen geeigneten Kunststoff. Die Dekorplatte 14 überdeckt die Oberfläche der Trägerplatte 12, die in Fig. 1 nur teilweise dargestellt ist, vollständig. Die in Fig. 1 oben gelegene Seite der Verbundplatte 10 soll im folgenden als Frontseite bezeichnet werden, da es sich um die Seite handelt, die beim Einbau der Verbundplatte 10, insbesondere in einem Möbelkorpus, gewöhnlich vom gelegen ist, wenngleich diese Einbauposition und Orientierung für die Erfindung nicht beschränkend ist. Dementsprechend soll die in Fig. 1 unten gelegene Seite als Rückseite bezeichnet werden. Die Verbundplatte 10 ist somit vollflächig an ihrer Frontseite durch die Dekorplatte 14 verblendet.

Die Trägerplatte 12 ist in sich wiederum mehrschichtig aufgebaut. Sie umfasst in ihrem Kern einen Rahmen 16, der aus mehreren Rahmenleisten zusammengesetzt ist. In Fig. 1 sind zwei solcher Leisten 18, 20 dargestellt, die an einer Stoßstelle 22 stumpf aufeinander stoßen. Die Leisten 18, 20 sind quaderförmig, mit einem rechteckigen Querschnitt. Sämtliche Leisten 18, 20, 24, 26 zur Bildung des Rahmens 16 sind in Fig. 2 in einer Draufsicht erkennbar. Der Rahmen ist insgesamt rechteckig und wird an jeder Seite durch eine Rahmenleiste 18, 20, 24, 26 begrenzt. Die Rahmenleisten 18, 20, 24, 26 begrenzen im Inneren des Rahmens einen rechteckigen Hohlraum 28.

An ihren Stoßstellen 22 sind die jeweils aufeinander stoßenden Rahmenleisten 18, 20, 24, 26 nicht durch feste Verbindungsmittel untereinander verbunden, das heißt, die Rahmenleisten 18, 20, 24, 26 sind an ihren Stoßflächen 30 (Fig. 1) nicht miteinander verklebt, und es sind auch keine mechanischen Verbindungsmittel wie etwa Schrauben, Klammern oder dergleichen vorgesehen, welche die Rahmenleisten 18, 20, 24, 26 zusammenhalten. Der Rahmen 16 ist also lose zusammengefügt und wird durch darüber und darunter befindliche Platten zusammengehalten, nämlich durch eine Frontplatte 32 und eine Rückplatte 34, die an der Frontseite und an der Rückseite auf den Rahmen 16 aufgeklebt sind. Die Frontplatte 32 und die Rückplatte 34 nehmen jeweils die volle Fläche der Trägerplatte 12 ein und begrenzen somit den Hohlraum 28 innerhalb des Rahmens 16 an der Vorder- und Rückseite der Trägerplatte 12, so dass dieser zu allen Seiten hin geschlossen ist. Die Frontplatte 32 und die Rückplatte 34 sind jeweils vollflächig mit der darunter bzw. darüber liegenden Rahmenleiste 18, 20, 24, 26 verklebt, so dass sich ein fester, aber verzugsfreier Verbund zwischen den Rahmenleisten 18, 20, 24, 26 und der Frontplatte 32 und der Rückplatte 34 ergibt. Durch diesen Verbund behalten die Rahmenleisten 18, 20, 24, 26 ihre Position, und der Rahmen 16 behält seine Form.

Für den Rahmen 16 und die Frontplatte 32 und die Rückplatte 34 sind im vorliegenden Ausführungsbeispiel unterschiedliche Holzwerkstoffe gewählt. Die Rahmenleisten 18, 20, 24, 26 bestehen jeweils aus einem Holzwerkstoff mit vergleichsweise geringer Dichte, nämlich einem Holzspanwerkstoff. Denkbar ist auch die Verwendung eines mitteldichten Holzfaserwerkstoffs (MDF). Durch diese Materialien lässt sich ein Rahmen 16 mit vertretbarem Gewicht zu verhältnismäßig niedrigen Kosten aufbauen. Hingegen sind die Frontplatte 32 und die Rückplatte 34 vorliegend aus einem Holzwerkstoff höherer Dichte gefertigt, nämlich aus einem hochdichten Holzfaserwerkstoff (HDF). Möglich ist allerdings auch die Verwendung von Front- und Rückplatten 32,34 aus mitteldichtem Holzfaserwerkstoff (MDF), Hartschaum, Polyurethan (PU) oder einem Polystyrol-Schaum. Das höhere spezifische Gewicht der Frontplatte 32 und der Rückplatte 34 spielen für das Gesamtgewicht der Trägerplatte 12 keine herausragende Rolle, da die Frontplatte 32 und die Rückplatte 34 im Vergleich zum Rahmen 16 relativ dünn sind. Wie im vorliegenden Ausführungsbeispiel, können die Frontplatte 32 und die Rückplatte 34 etwa die gleiche Dicke aufweisen, während die Dicke des Rahmens 16 ein Mehrfaches dieser Dicke beträgt, beispielsweise etwa die dreifache Dicke.

Der Hohlraum 28, der vom Rahmen 16 und den Platten 32, 34 begrenzt wird, ist durch eine Füllplatte, nämlich eine Wabenplatte 36 aus Kunststoff ausgefüllt. Diese Wabenplatte 36 enthält selbst eine große Anzahl von Hohlräumen und hat daher ein sehr geringes spezifisches Gewicht. Sie kann beispielsweise auch aus Papier, Hartschaum, Polyurethan (PU) oder einem Polystyrol-Schaum gefertigt sein. Sie stabilisiert somit die Trägerplatte 12 in ihrem Kern, ohne wesentlich zum Gesamtgewicht beizutragen. Die Wabenplatte 36 ist lose schwimmend in den Hohlraum 28 eingelegt, das heißt, es existieren keine Verbindungen zum Rahmen 16 oder zu der Frontplatte 32 und der Rückplatte 34, wie etwa flächige Klebeverbindungen. Da die Wabenplatte 36 in ihren äußeren Abmessungen an den Hohlraum 28 angepasst ist und diesen vollständig ausfüllt, ist ihre Position innerhalb des Hohlraums 28 festgelegt.

Auf die Trägerplatte 12 mit dem vorstehend beschriebenen Aufbau ist die Dekorplatte 14 mit Hilfe von Spiegelbändern 38 aufgeklebt. Bei diesen Spiegelbändern handelt es sich im wesentlichen um beidseitig klebende Abschnitte aus Klebstoffband, die zwischen der Frontseite der Frontplatte 32 (d.h. der in Fig. 1 oben liegenden Seite der Frontplatte 32) und der Rückseite der Dekorplatte 14 einliegen. In Wirklichkeit sind diese Spiegelbänder 38 flacher als in Fig. 1 dargestellt und tragen kaum messbar zur Gesamtdicke der Verbundplatte 10 bei.

Die Spiegelbänder 38 sind in den Randbereichen der Frontplatte 32 angeordnet, die über den Rahmenleisten 18, 26 liegen (siehe auch Fig. 2). Die Dekorplatte 14 ist also lediglich in diesen Randbereichen mit der darunter liegenden Trägerplatte 12 verbunden.

Die Verbundplatte 10 kann zusätzlich auf hier nicht näher dargestellte Weise an ihrer Rückseite (d.h. an der Rückseite der Rückplatte 34) lackiert sein und an ihren Kanten durch Umleimer oder durch eine Lackierung abgeschlossen sein. Ferner können die Kanten der Verbundplatte 10 angefast oder abgeschrägt sein. Dies sind herkömmliche Maßnahmen zur Herstellung einer Verbundplatte 10 zum Möbelbau, auf welche daher nicht näher Bezug genommen werden soll. Die Frontplatte 32, die Rückplatte 34 und die Wabenplatte 36 können einseitig oder beidseitig mit einer Beschichtung versehen sein, etwa mit einer Folienbeschichtung oder einer Lackbeschichtung. Im Fall der Wabenplatte 36 kann diese Beschichtung insbesondere die in der Wabenplatte 36 enthaltenen Hohlräume abschließen.

Die vorliegende Verbundplatte 10 weist wesentliche Vorteile hinsichtlich ihrer Form- und Dimensionsstabilität auf. Insbesondere wird ein Verkrümmen der Trägerplatte 12 bei starken Temperatur- und Feuchtigkeitsschwankungen weitgehend unterbunden. Dies liegt vor allem daran, dass die Rahmenleisten 18, 20, 24, 26 in der Rahmenebene nicht fest miteinander verbunden sind, sondern sie können an ihren Stoßstellen 22 gegeneinander arbeiten, d.h. reversible Dimensionsänderungen in dieser Ebene vornehmen, ohne das Zug- oder Schubbewegungen auf die jeweils angrenzende Rahmenleiste übertragen werden. Hingegen sind die Frontplatte 32 und die Rückplatte 34 relativ dimensionsstabil und gleichen solche Bewegungen des Rahmens 16 innerhalb der Trägerplatte 12 gegeneinander aus, d.h. sie bilden Gegenzugschichten, die die mechanischen Spannungen aufnehmen. Mit der Frontplatte 32 und der Rückplatte 34 sind die Rahmenleisten 18, 20, 24, 26 verzugsfrei verklebt, beispielsweise durch flächiges Verleimen mit einem PUR-Kleber.

Es ist auch möglich, dass die Rahmenleisten 18, 20, 24, 26 aus einem Holzwerkstoff bestehen, der in gewissem Umfang Wasser aufnehmen und somit aufquellen kann und sich bei Temperaturschwankungen in größerem Maße ausdehnt und zusammenzieht. Die Trägerplatte 12 besteht jedoch nicht vollflächig aus einem solchen Material, sondern wird durch die Rahmenleisten 18, 20, 24, 26 nur in ihren Randbereichen stabilisiert. Die Frontplatte 32 und die Rückplatte 34 können hingegen aus einem relativ dimensionsstabilen Material bestehen.

Eine Übertragung solcher Ausdehnungsbewegungen des Rahmens 16 auf die Dekorplatte 14 wird somit weitgehend unterbunden, zumal die Dekorplatte 14 mit der darunter liegenden Verbundplatte 12 auch lediglich an einigen Klebestellen im Randbereich der Verbundplatte 10 mit der Trägerplatte 12 verbunden ist. Es findet hierdurch eine weitgehende Entkopplung der Dekorplatte 14 von der Trägerplatte 12 statt.

Die Wabenplatte 36 dient, wie oben beschrieben, dazu, einen Hohlraum im Inneren der Trägerplatte zu vermeiden, ohne dass diese deutlich schwerer wird. Die Wabenplatte 36 selbst ist ausgesprochen dimensionsstabil und daher in Bezug auf klimatische Schwankungen unkritisch. Ausdehnungs- oder Schrumpfungsbewegungen der Rahmenleisten 18, 20, 24, 26 werden durch die Wabenplatte 36 nicht behindert. An den Stoßstellen 22 zwischen den Rahmenleisten 18, 20, 24, 26 können minimale Zwischenräume vorhanden sein, die Platz für eine Ausdehnung der einzelnen Leisten lassen.

Aus der in den Fig. 1 und 2 beschriebenen Verbundplatte 10 lässt sich ein Möbelkorpus aufbauen, dessen Frontseite durch die Verbundplatte gebildet wird. Beispielsweise bildet die Verbundplatte 10 eine Schrankfront oder eine Schubladenfront.

Die Trägerplatte 12 lässt sich herstellen, indem zunächst die einzelnen Rahmenleisten 18, 20, 24, 26 lose zu dem Rahmen 16 zusammengelegt werden, in der in Fig. 2 dargestellten Anordnung. Beispielsweise kann ein äußerer mechanischer Rahmen vorgesehen sein, der den Rahmen 16 aus den Rahmenleisten 18, 20, 24, 26 lose zusammenhält oder diese geringfügig miteinander verspannt. Anschließend wird wahlweise zuerst die Frontplatte 32 oder die Rückplatte 34 aufgeklebt, oder beide zugleich. Es versteht sich, dass vor dem Aufkleben der zweiten von diesen beiden Platten 32, 34, d.h. vor Verschließen des Hohlraums 28, noch die Wabenplatte 36 lose in den Hohlraum 28 eingelegt werden muss.

Ist die Trägerplatte 12 vollständig, wird die Dekorplatte 14 mittels der Spiegelbandabschnitte 38 auf die Frontseite der Frontplatte 32 zur Bildung der Verbundplatte 10 aufgeklebt. Naturgemäß ist es auch möglich, die Dekorplatte 14 auf diese Weise auf die Frontplatte 32 aufzukleben, bevor die Frontplatte 32 auf den Rahmen 16 geklebt wird. Diesbezüglich ist die Reihenfolge der Verfahrensschritte zur Herstellung der Verbundplatte 10 nicht von Bedeutung.

## Patentansprüche

**1.** Trägerplatte (12) für den Möbelbau, insbesondere geeignet als Träger für eine Dekorplatte (14), welche Trägerplatte (12) mehrschichtig aufgebaut ist und zumindest teilweise aus einem Holzwerkstoff besteht, **dadurch gekennzeichnet, dass** die Trägerplatte (12) eine Rahmen (16) umfasst, der aus Rahmenleisten (18, 20, 24, 26) aus einem Holzspanwerkstoff oder einem Holzfaserwerkstoff ohne feste Verbindungsmittel an den Stoßstellen (22) zwischen den Rahmenleisten (18, 20, 24, 26) zusammengesetzt ist, eine Frontplatte (32) und eine Rückplatte (34), die an der Frontseite und der Rückseite der Trägerplatte (12) auf den Rahmen (16) aufgeklebt sind, derart, dass zwischen der Frontplatte (32) und der Rückplatte (34) ein Hohlraum (28) innerhalb des Rahmens (16) verbleibt, und eine Füllplatte (36), die in diesem Hohlraum (28) lose einliegt und eine Dichte aufweist, die geringer ist als diejenige des Holzwerkstoffs der Rahmenleisten (18, 20, 24, 26).

**2.** Trägerplatte gemäß Anspruch 1, **dadurch gekennzeichnet, dass** die Frontplatte (32) und die Rückplatte (34) jeweils aus einem Material bestehen, das aus einem der folgenden Materialien ausgewählt ist: ein hochdichter Holzfaserwerkstoff (HDF), ein mitteldichter Holzfaserwerkstoff (HDF), ein Hartschaum, Polyurethan (PU), ein Polystyrol-Schaum.

**3.** Trägerplatte gemäß Anspruch 1 oder 2, **dadurch gekennzeichnet, dass** die Füllplatte (36) eine Wabenplatte ist.

**4.** Trägerplatte gemäß einem der Ansprüche 1 bis 3, **dadurch gekennzeichnet, dass** die Füllplatte (36) aus Kunststoff, Papier, Hartschaum, Polyurethan (PU) oder einem Polystyrol-Schaum hergestellt ist.

**6.** Trägerplatte gemäß einem der vorhergehenden Ansprüche, **dadurch gekennzeichnet, dass** die Frontplatte (32) und die Rückplatte (34) etwa die gleiche Dicke aufweisen, und dass die Dicke des Rahmens (16) ein Mehrfaches der Dicke der Frontplatte (32) bzw. der Rückplatte (34) beträgt.

**7.** Verbundplatte (10) für den Möbelbau, umfassend eine Trägerplatte (12) gemäß einem der vorhergehenden Ansprüche und eine Dekorplatte (14), die durch Klebestreifen oder Klebepunkte auf die Frontplatte (32) aufgeklebt ist, welche in den Randbereichen der Frontplatte (32) angeordnet sind, die über der Rahmenleisten (18, 20, 24, 26) liegen.

**8.** Trägerplatte gemäß Anspruch 7, **dadurch gekennzeichnet, dass** die Dekorplatte (14) aus Glas, Metall, Polycarbonat oder einem anderen Kunststoff besteht.

**9.** Möbelkorpus, dessen Frontseite eine Verbundplatte (10) gemäß Anspruch 7 oder 8 umfasst.

**10.** Verfahren zur Herstellung einer Trägerplatte für den Möbelbau, **gekennzeichnet durch** die folgenden Schritte:
- Zusammensetzen von Rahmenleisten (18, 20, 24, 26) aus einem Holzspanwerkstoff oder einem Holzfaserwerkstoff zu einem Rahmen (16), ohne feste Verbindungsmittel an den Stoßstellen zwischen den Rahmenleisten (18, 20, 24, 26); und
- Aufkleben einer Frontplatte (32) und einer Rückplatte (34) auf die gegenüberliegenden Seiten des Rahmens (16);
- wobei vor Abschluss des Schritts des Aufklebens der Frontplatte (32) und der Rückplatte (34) auf den Rahmen (16) eine Füllplatte (36) lose in einen von der Frontplatte (32) und der Rückplatte (34) begrenzten Hohlraum (28) innerhalb des Rahmens (16) eingelegt wird.

**11.** Verfahren zur Herstellung einer Verbundplatte für den Möbelbau, umfassend die Schritte zur Herstellung einer Trägerplatte gemäß Anspruch 10, und einen Schritt des Aufklebens einer Dekorplatte (14) auf die Frontplatte (32) der Trägerplatte durch Klebestreifen oder Klebepunkte.
